Europäisches Patentamt

European Patent Office

Office européen des brevets

(11) Publication number: **0 055 066**
A1

## EUROPEAN PATENT APPLICATION

(21) Application number: **81305890.6**

(22) Date of filing: **15.12.81**

(51) Int. Cl.³: **F 16 K 27/00**, F 16 K 11/087, F 16 K 11/22

(30) Priority: **24.12.80 US 219906**
**02.10.81 US 307860**

(43) Date of publication of application: **30.06.82**
**Bulletin 82/26**

(84) Designated Contracting States: **AT BE CH DE FR GB IT LI LU NL SE**

(71) Applicant: **SMITH VALVE CORPORATION, 125 Fisher Street, Westboro Massachusetts 01581 (US)**

(72) Inventor: **Harding, Bruce L., 33 Anthony Drive, Holden Massachusetts 01520 (US)**

(74) Representative: **Pratt, David Martin et al, Brookes & Martin High Holborn House 52/54 High Holborn, London. WC1V 6SE (GB)**

(54) **Fluid flow control valve.**

(57) A valve (10) is disclosed for controlling fluid flow through two laterally-spaced openings (16a and 16b) in a surface (14) of a manifold element (12). The valve (10) includes a housing (20) having a mounting face (24) for mounting against the manifold surface (14), with a pair of laterally-spaced ports (26a and 26b) arranged to communicate with the openings (16a and 16b) in the manifold surface (14). A conduit (28) leads from one of the ports (26a) internally through the valve housing (20) to the other port (26b). A ball element (32) is rotatably arranged in the conduit (28). The ball element (32) has a passageway (40) extending therethrough. The ball element (32) is rotatable between an open position, in which fluid can flow through the conduit (28) via the ball passageway (40), and a closed position, in which fluid flow through the conduit (28) is blocked by the ball element (32).

- 1 -

Fluid flow control valve

This invention relates generally to a fluid flow control
valve, and in particular to a manifold-mounted  fluid flow
control valve.

A primary object of the present invention is to provide
a ball-type, manifold-mounted, fluid flow control valve
having a modular construction which is readily adaptable
to either single or dual mode applications.  Another
object of the present invention is the provision of a
valve which can be readily replaced without disturbing
permanent pipe connections.  A further object of the
present invention is the provision of a valve which is
fully ported, to make up for any losses which might
otherwise be occasioned by other than straight-line flow.

The present invention provides a valve for controlling
fluid flow through two laterally-spaced openings in a
surface of a manifold element, the valve comprising a
valve housing having a mounting face for mounting against
the manifold surface, the mounting face having a pair of
laterally-spaced ports arranged to communicate with the
openings in the manifold surface, a conduit leading from
one of the ports internally through the valve housing to
the other port, a ball element rotatably arranged in the
conduit, the ball element having a passageway extending therethrough, operating means for rotating the ball element
between an open position in which fluid can flow through the conduit via the passageway, and a closed position in which fluid flow through the conduit is blocked by the ball element, and attachment means for removably securing the valve housing to the manifold element with the mounting face and the manifold surface in mutual contact, and with each of the ports in communication with one of said openings.

Advantageously, the valve further comprises sealing means at the mounting face for establishing a fluid-tight seal between the mounting face and the manifold surface.

In a preferred embodiment, the ball element is rotatable about an axis extending in a direction parallel to the mounting face. Preferably, the operating means comprises a stem extending longitudinally along said axis, one end of the stem being connected to the ball element and the opposite end of the stem protruding through a side surface of the valve housing. Advantageously, the ports and the conduit are arranged in a common plane lying at a 45$^{\circ}$ angle relative to said axis.

Conveniently, the valve housing consists of a body detachably joined to a face plate by second attachments means, the ports being located in the face plate and the conduit being located in the body. Advantageously, the ball element is rotatably supported within the conduit between a pair of annular seats one of the seats being located in a stepped groove in the conduit, and the other seat being supported by an annular disc abutting the face plate. Preferably, the first-mentioned attachment means and the second attachment means are arranged on opposite sides of the plane.

In another preferred embodiment, the ball element is rotatable about an axis extending in a direction perpendicular to the mounting face. In this case, the conduit

- 3 -

0055066

may be generally U-shaped, and the passageway may be L-shaped.

In a further preferred embodiment, the ball element is provided with a first vent passage communicating at one end with the passageway, and wherein the housing is provided with a second vent passage leading from a cavity which is isolated in the valve open position to the housing exterior, the arrangement of the vent passages being such that, when the ball element is in the open position, the opposite end of the first vent passage is connected to the cavity, and when the ball element is in the closed position, the first vent passage establishes a fluid connection between one of the ports and the second vent passage. In this case, the passageway may be straight.

Several forms of valve, each constructed in accordance with the invention, will now be described, by way of example, with reference to the accomapnying drawings, in which:-

Figure 1 is a front perspective view of a first form of valve;

Figure 2 is a rear perspective view of the valve shown in Figure 1;

Figure 3 is a perspective view of the valve shown in Figures 1 and 2, with portions of the housing broken away to illustrate the arrangement of internal features and components;

Figure 4 is a front elevation of the valve shown in Figures 1 to 3;

Figures 5A and 5B are cross-sections taken respectively on the lines 5A-5A and 5B-5B of Figure 4;

Figure 6 is a front perspective view of two valves of the type shown in Figures 1 to 5, the two valves being coupled by a common subplate, and being operable simultaneously as a dual-mode assembly;

Figure 7 is a front elevation of the dual-mode valve assembly shown in Figure 6;

Figure 8 is a cross-section taken on the line 8-8 of Figure 7;

Figure 9 is a front perspective view of a second form of valve;

Figure 10 is a front elevation of the valve shown in Figure 9;

Figures 11 and 12 are cross-sections taken on the line A-A of Figure 10, and respectively showing the valve in its open and closed positions;

Figure 13 is a cross-section through a third form of valve; and

Figure 14 is a part sectional view similar to Figure 13, showing the valve in a closed position.

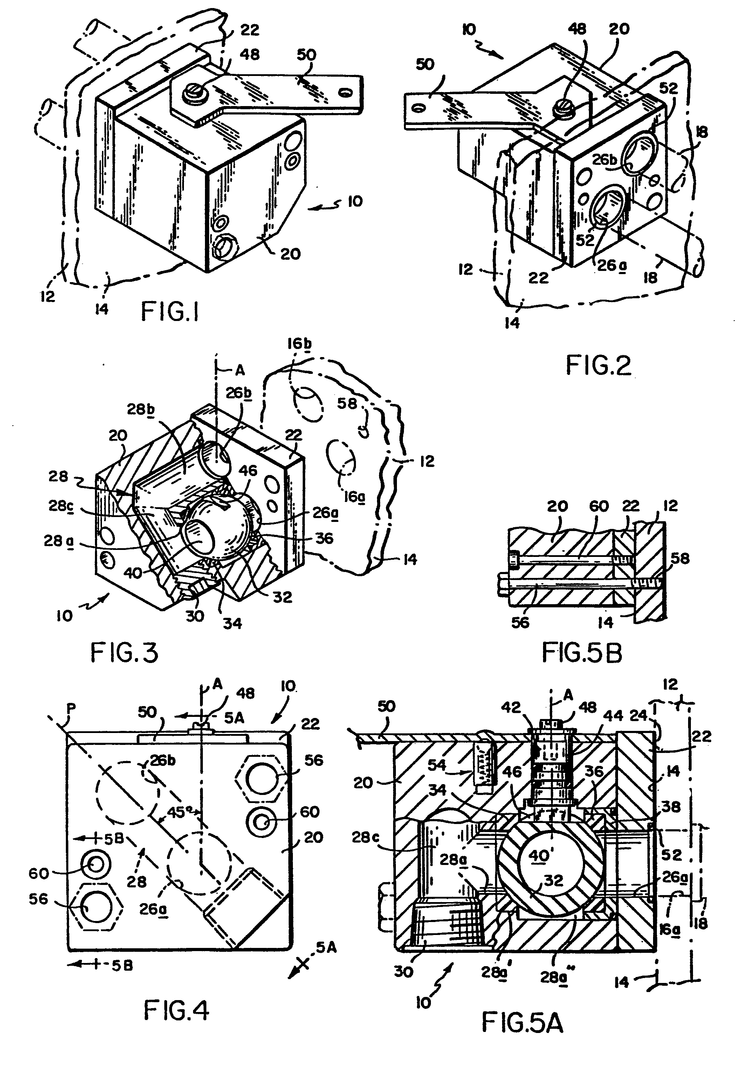

Referring to the drawings, Figures 1 to 5B show a single-mode valve 10 mounted on a manifold element 12, in this case a control panel. The manifold element 12 has a mounting surface 14 with two laterally spaced openings 16a and 16b. The openings 16a and 16b communicate with fluid circuit piping 18 permanently connected to the rear side of the manifold element 12.

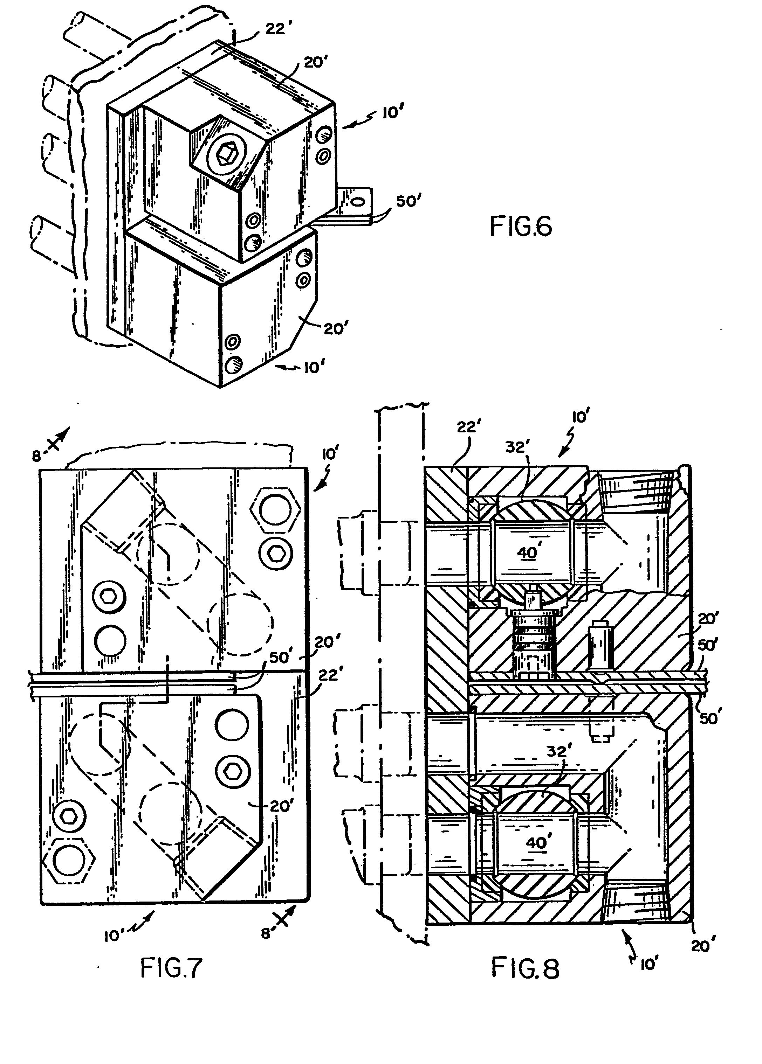

The valve 10 has a housing including a body 20 and a face plate 22. As can best be seen in Figure 5A, the face plate 22 has a face 24 adapted to be mounted against the mounting surface 14 of the manifold element 12. The face plate 22 is provided with a pair of laterally-spaced valve ports 26a and 26b (see Figures 2 to 6), which are arranged to communicate with the manifold openings 16a and 16b respectively when the valve 10 is mounted in place on the manifold element 12.

The valve ports 26a and 26b are interconnected by an

0055066

internal, generally U-shaped conduit 28. The conduit 28 consists of two parallel, laterally-spaced sections 28a and 28b extending respectively inwardly from the valve ports 26a and 26b to a connecting section 28c which is closed, at one end, by a threaded plug 30.

As is best shown in Figure 5A, the conduit section 28a includes a stepped groove 28a', and an enlarged diameter portion defining a valve chamber 28a". A ball element 32 is mounted within the valve chamber 28a" between a pair of circular valve seats 34 and 36. The valve seat 34 is located within the stepped groove 28a', and the valve seat 36 is carried in a disc 38 abutting the face plate 22. The ball element 32 has a straight passageway 40 extending therethrough. An operating stem 42 is arranged in a hole 44 in the body 20. The stem 42 has one end received in a notch 46 in the ball element 32. The opposite end of the stem 42 is connected, by any convenient means such as a screw 48, to a handle 50.

The handle 50 operates, via the stem 42, to rotate the ball element 32 about an axis "A" (see Figure 5A) between an open position (as shown in Figure 3) and a closed position ( as shown in Figure 5A). When the ball element 32 is in the open position , the passageway 40 is in alignment with the internal conduit 28a, thereby accommodating fluid flow from either the valve port 26a or the valve port 26b through the conduit 28 to the other valve port. When in the closed position, the ball element 32 blocks the conduit 28, thereby isolating the valve ports 26a and 26b from one another.

Preferably, the valve 10 is "fully ported" by making the diameter of the passageway 40 equal to the minimum internal diameter of the conduit 28. Appropriate seals, for example O-rings 52 surrounding the valve ports 26a and 26b, are employed to establish a fluid-tight seal between the valve 10 and the manifold element 12. A ball-plunger assembly, generally indicated at 54 in Figure 5A, may be employed releasably to hold the operating handle 50 in its open and/or closed positions.

The valve 10 is removably secured to the manifold element 12 by cap screws 56 which extend through both the body 20 and the face plate 22 for threaded engagement in tapped holes 58 in the mounting surface 14. Similarly, the body 20 is connected to the face plate 22 by shorter cap screws 60. As is best shown in Figure 4, the valve ports 26a and 26b, and the internal conduit 28, are contained in a common plane "P" lying at a 45$^{\circ}$ angle relative to the axis A. This arrangement provides ample room for locating the cap screws 56 and 60 on opposite sides of the plane P, while minimising the external dimensions of the valve 10.

Referring now to Figures 6 to 8, a dual-mode valve assembly is shown. This assembly comprises a pair of valves 10' which are essentially identical to the valves 10 described above with reference to Figures 1 to 5, except for the fact that their valve bodies 20' share a common face plate 22'. In this arrangement, the operating handles 50' are located laterally adjacent one to the other (here shown in an overlying relationship), thereby accommodating simultaneous adjustment of both valves 10'. In this manner, by appropriately adjusting the angular relationship of each handle 50' to the hole 40' in the corresponding ball element 32', the valves 10' can be simultaneously opened and closed; or one valve can be opened while the other is closed, and _vice versa_.

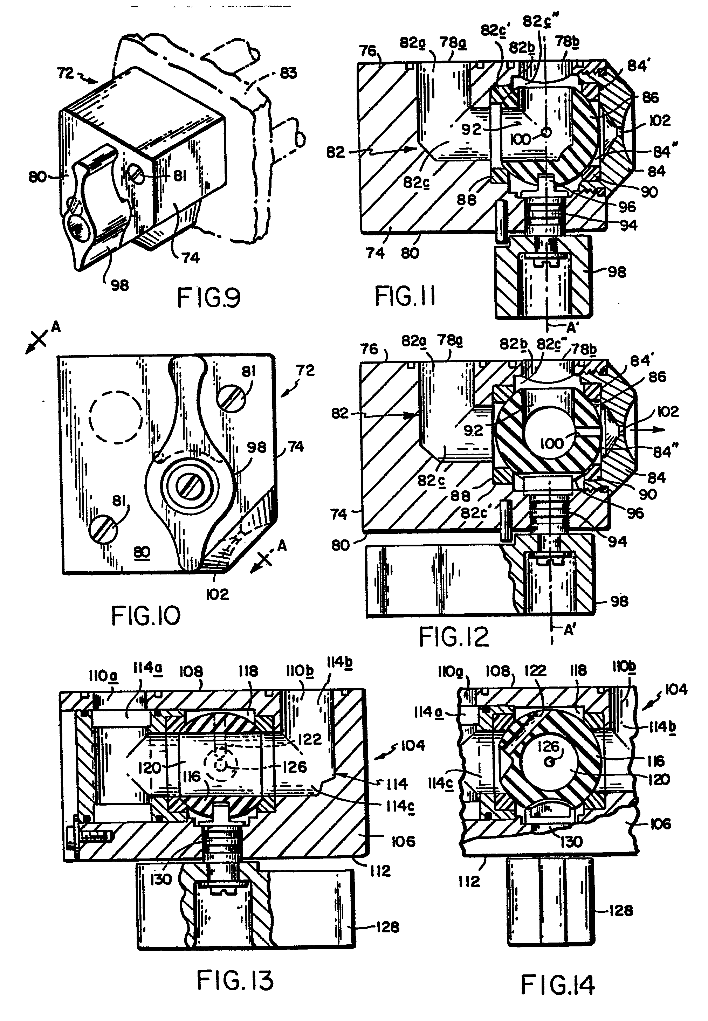

Referring now to Figures 9 to 12, a valve 72 has a valve housing 74. The valve housing 74 has a mounting face 76 with a pair of laterally-spaced valve ports 78a and 78b, and a front face 80. Screws 81 are provided for fastening the valve housing 74 to a manifold element 83. The valve ports 78a and 78b are interconnected by an internal, generally U-shaped conduit 82 having parallel, laterally-spaced sections 82a and 82b extending respectively inwardly from the valve ports 78a and 78b to a connecting section 82c having a threaded plug 84 at one end thereof. The conduit section 82c includes a stepped groove 82c', and an enlarged diameter portion defining a valve chamber 82c". A ball element 86 is mounted within the valve chamber 82c" between a pair of circular valve seats 88 and 90 located respectively within the groove 82c' and another groove 84' in the plug 84. The ball element 86 has an L-shaped passageway 92.

An operating stem 94 extends through a hole in the front face 80 of the housing 74. The stem 94 has one end received in a notch 96 in the ball element 85, and the opposite end of the stem is connected to an external handle 98. The handle 98, the stem 94 and the ball element 86 are rotatable about an axis A' between an open position (as shown in Figure 11) and a closed position (as shown in Figure 12). The axis A' is perpendicular to the plane of the mounting face 76. When the ball element is in the open position, the valve port 78a is connected to the valve port 78b via the conduit sections 82a and 82c, the passageway 92 and the conduit section 82b. However, when the ball element 86 is in the closed position, the conduit section 82c is blocked, and hence the valve port 78a is isolated from the valve port 78b.

The ball element 86 may include a vent passage 100 leading from the passageway 92. When the ball element 86 is in the open position, the vent passage 100 connects the passageway 92 to the valve chamber 82c", thence to the valve port 78b, thus providing a dual path from the passageway 92 to the valve port 78b. However, when the ball element 86 is in the closed position, the vent passage 100 is in communication with a second vent passage 102 in the plug 84, via a cavity 84" which is isolated when the valve 72 is in the open position, thus providing a means of venting fluid pressure in any fluid line connected to valve port 78b.

Figures 13 and 14 show a valve 104 having a housing 106 provided with a mounting face 108 having a pair of valve ports 110a and 110b, and a front face 112. The valve ports 110a and 110b are interconnected by an internal conduit 114 having communicating sections 114a, 114b and 114c; and a ball element 116 is located in an enlarged valve chamber 118 formed in the conduit section 114c. The ball element 116 has a straight through passageway 120, and may have an angled vent passageway 122 leading from passageway 114c to the valve chamber 118. A second vent passage 126 leads from the valve chamber 118 to the exterior of the housing 106.

A handle 128 and a stem 130 are employed to rotate the ball element 116 between an open position (as shown in Figure 13) and a closed position (as shown in Figure 14). When the ball element 116 is in the open position, the passageway 120 is aligned with the conduit section 114c, and the valve ports 110a and 110b are thus in fluid communication. However, when the ball element 116 is in the closed position, the valve port 110a is isolated from the valve port 110b, and any fluid line connected to the port 110a will be vented through the vent passage 122, the valve chamber 118 and the passage 126. By rearranging the interconnection between the stem 130 and the ball element 116, it is possible alternatively to vent a fluid line connected to the valve port 110b while, again isolating one valve port from the other.

It will be apparent that the valves described above can be replaced without disturbing the permanent connection of the fluid piping to their manifold elements.  The valves of the embodiment shown in Figures 1 to 5 are adapted for use either singly or in pairs; and, when they are paired, they may be arranged for simultaneous operation as shown in Figures 6 to 8.

**0055066**

Claims:

1.    A valve (10, 72, 104) for controlling fluid flow through two laterally-spaced openings (16a and 16b) in a surface (14) of a manifold element (12, 83), the valve (10, 72, 104) comprising a valve housing (20, 74, 106) having a mounting face (24, 76, 108) for mounting against the manifold surface (14), the mounting face (24, 76, 108) having a pair of laterally-spaced ports (26a and 26b, 78a and 78b, 110a and 110b) arranged to communicate with the openings (16a and 16b) in the manifold surface (14), a conduit (28, 82, 114) leading from one of the ports (26a or 26b, 78a or 78b, 110a or 110b) internally through the valve housing (20, 74, 106) to the other port (26b or 26a,  78b or 78a, 110b or 110a), a ball element (32, 86, 116) rotatably arranged in the conduit (28, 82, 114), the ball element (32, 86, 116) having a passageway (40, 92, 120) extending therethrough, operating means (42 and 50, 94 and 98, 128 and 130) for rotating the ball element (32, 86, 116) between an open position in which fluid can flow through the conduit (28, 82, 114) via the passageway (40, 92, 120), and a closed position in which fluid flow through the conduit (28, 82, 114) is blocked by the ball element (32, 86, 116), and attachment means (56, 81) for removably securing the valve housing (20, 74, 106) to the manifold element (12, 83) with the mounting face (24, 76, 108) and the manifold surface (14) in mutual contact, and with each of the ports (26a and 26b. 78a and 78b, 110a and 110b) in communication with one of said openings (16a and 16b).

2.    A valve as claimed in claim 1, further comprising sealing means (52) at the mounting face (24) for establishing a fluid-tight seal between the mounting face and the manifold surface (14).

3.    A valve as claimed in claim 1 or claim 2, wherein the ball element (32) is rotatable about an axis (A) extending in a direction parallel to the mounting face (24).

4.      A valve as claimed in claim 3, wherein the operating means comprises a stem (42) extending longitudinally along said axis (A), one end of the stem (42) being connected to the ball element (32) and the opposite end of the stem (42) protruding through a side surface of the valve housing (20).

5.      A valve as claimed in claim 3 or claim 4, wherein the ports (26a and 26b) and the conduit (28) are arranged in a common plane (P) lying at a 45$^{\text{o}}$ angle relative to said axis (A).

6.      A valve as claimed in any one of claims 1 to 5, wherein the valve housing consists of a body (20) detachably joined to a face plate (22) by second attachments means (60), the ports (26a and 26b) being located in the face plate (22), and the conduit (28) being located in the body (20).

7.      A valve as claimed in claim 6, wherein the ball element (32) is rotatably supported within the conduit (28) between a pair of annular seats (34, 36), one of the seats (34) being located in a stepped groove (28a') in the conduit (28), and the other seat (36) being supported by an annular disc (38) abutting the face plate (22).

8.      A valve as claimed in claim 6 or claim 7, wherein the first-mentioned attachment means (56) and the second attachment means (60) are arranged on opposite sides of said plane (P).

9.      A valve as claimed in claim 1, wherein the ball element (86) is rotatable about an axis extending in a direction perpendicular to the mounting face (76).

10. A valve as claimed in claim 9, wherein the conduit (82) is generally U-shaped, and wherein the passageway (92) is L-shaped.

11. A valve as claimed in claim 1, wherein the ball element (116) is provided with a first vent passage (122) communicating at one end with the passageway (120), and wherein the housing (106) is provided with a second vent passage (126) leading from a cavity (118) which is isolated in the valve open position to the housing exterior, the arrangement of the vent passages (122, 126) being such that, when the ball element (116) is in the open position, the opposite end of the first vent passage (122) is connected to the cavity (118), and when the ball element (116) is in the closed position, the first vent passage (122) establishes a fluid connection between one of the ports (110a or 110b) and the second vent passage (126).

12. A valve as claimed in claim 11, wherein the passageway (120) is straight.

13. A multiple valve assembly for controlling fluid flow through two pairs of laterally-spaced openings in a manifold surface, the valve assembly comprising a pair of identical valves, each of which is as claimed in any one of claims 1 to 12.

0055066

FIG.1

FIG.2

FIG.3

FIG.5B

FIG.4

FIG.5A

FIG.6

FIG.7

FIG.8

FIG.9

FIG.10

FIG.11

FIG.12

FIG.13

FIG.14

# EUROPEAN SEARCH REPORT

## European Patent Office

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | FR - A - 2 366 502 (KNORR-BREMSE) <br><br> * page 2, line 27 to page 6, line 18; page 7, line 6 till 36; figures 1,2,3,5,6 * <br><br> -- | 1,2,4, 6,7,9, 10,11, 12 | F 16 K 27/00 <br> 11/087 <br> 11/22 |
| A | US - A - 3 778 029 (BAKER) <br><br> ----- | | |

**TECHNICAL FIELDS SEARCHED (Int.Cl. 3)**

F 16 K
F 15 B

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search | Date of completion of the search | Examiner | |
| The Hague | 17-03-1982 | VAN REETH | |